# EUROPEAN PATENT APPLICATION

(11) **EP 4 303 327 A1**
(43) Date of publication of application: **10.01.2024**
(21) Application number: 22798869.8
(22) Date of filing: 08.04.2022
(51) Int. Cl.: C21B 11/10, C21C 5/52, C21C 7/072, F23D 17/00, F27B 3/08, F27B 3/18, F27B 3/20, F27B 3/22, F27D 11/06, F27D 11/08

(54) **ELECTRIC FURNACE AND STEELMAKING METHOD**

(30) Priority: 07.05.2021 JP 2021078969
(71) Applicant: JFE Steel Corporation, Tokyo 100-0011 (JP)
(72) Inventor: OGASAWARA, Futoshi, Tokyo 100-0011 (JP); KAWABATA, Ryo, Tokyo 100-0011 (JP)
(74) Representative: Grünecker Patent- und Rechtsanwälte PartG mbB
(86) International application number: PCT/JP2022/017372
(87) International publication number: WO 2022/234762

(57) **Abstract**

Provided is a technique for melting a cold iron source by using a heat source with reduced CO₂ emissions. An electric furnace is provided with a burner directed toward furnace contents. The burner includes a powder-feeding pipe, a jet hole for jetting a fuel, and a jet hole for jetting combustion-supporting gas. Hydrogen gas or a hydrogen-enriched gaseous fuel is jetted as the fuel to form a burner flame. An auxiliary material that is in a powder form or is processed into a powder form is jetted through the powder-feeding pipe so that the auxiliary material passes through an inside of the burner flame. According to a steelmaking method, an electric furnace is provided with a burner that includes a jet hole for jetting a fuel and a jet hole for jetting combustion-supporting gas and that jets a flame through the jet holes toward an inside of the electric furnace. For at least a part of duration of one-heat operation of the electric furnace, hydrogen gas or a hydrogen-enriched gaseous fuel is used as the fuel of the burner, and an auxiliary material that is in a powder form or is processed into a powder form is blown in to pass through an inside of the flame formed by the burner.

## Description

### Technical Field

The present invention is related to a technique for melting a cold iron source using a heat source with reduced CO₂ emissions to decrease greenhouse gas emissions in producing iron and steel products.

### Background Art

From the viewpoint of preventing global warming, techniques have been recently developed in the iron and steel industry to reduce CO₂ gas emissions by decreasing fossil fuel consumption amounts. In existing integrated steelworks, molten pig iron is produced by reducing iron ore with carbon. The production of such molten pig iron requires approximately 500 kg of a carbon source per 1 t of molten pig iron to reduce the iron ore or the like. In contrast, when producing molten steel with a cold iron source such as iron scrap as a raw material, the carbon source necessary for reducing the iron ore is not required, while only energy with a sufficient heat quantity for melting the cold iron source is required. Accordingly, the CO₂ emissions can be substantially reduced.

For an operation with a high content of a cold iron source, an electric furnace such as an arc furnace or an induction melting furnace is often used, where most of the heat for melting the cold iron source is provided by electric power. To decrease electric power unit consumption, the arc furnace is operated with adopting the following techniques: (1) an auxiliary burner is provided on a furnace wall or a slag removal port to promote the melting of the cold iron source in a cold spot and the like; (2) a so-called oxygen-enriched operation for providing oxidation heat for the iron is performed by feeding oxygen through an oxygen gas feeding lance; and (3) the heat transfer efficiency of an arc to molten steel is enhanced by feeding oxygen and carbon powder from an oxygen gas feeding lance and a carbon injection lance, respectively, causing slag foaming to cover the arc.

However, the oxygen-enriched operation has a problem of a decrease in yield accomplished by oxidation loss of iron. Moreover, most of the auxiliary burners use hydrocarbon as a fuel. The slag foaming operation generates CO₂ gas by blowing the carbon powder into the slag. These techniques can decrease the electric power unit consumption but have a small effect of reducing CO₂ emissions. In the first place, when the electric power in use is obtained from a fossil fuel, CO₂ will be emitted from the use of the electric power as well. Therefore, to further reduce CO₂ emissions, it is desirable to improve heat efficiency and increase use of energy sources with reduced CO₂ emissions.

Even if we can obtain electric power with reduced CO₂ emissions and replace the electric power we use with it in the future, the need for techniques to decrease the electric power unit consumption will remain unchanged. Thus, those techniques also need to aim to reduce the CO₂ emissions. For example, hydrogen gas produced from renewable energy or other sources can be used as a fuel for an auxiliary burner or the like; however, hydrogen gas has a higher combustion rate and higher flame temperature compared to hydrocarbon gas and other gases, which poses a problem. The following are some known techniques to solve this problem.

For example, both Patent Literature 1 and Patent Literature 2 propose a technique for lowering the flame temperature by providing an additional combustion space upstream of a main combustion space to reduce the oxygen concentration therein. Further, Patent Literature 3 proposes a method for lowering the flame temperature by maintaining a distance between a hydrogen gas feeding flow path and a combustion air feeding flow path and thus preventing the hydrogen gas from mixing with combustion air to decrease the combustion rate.

Further, as a cold iron source to be melted, not only iron scrap but also solid reduced iron, which is produced by using a reducing agent with reduced CO₂ emissions, is expected to be used in a larger amount.

### Citation List

### Patent Literature

Patent Literature 1: JP-A-2020-46098
Patent Literature 2: JP-A-2021-25713
Patent Literature 3: JP-A-2020-46099

### Summary of Invention

### Technical Problem

The conventional techniques have the following problems.

The methods described in Patent Literatures 1 to 3 have a complicated and large facility structure, which brings about a problem of increased facility investment costs and maintenance costs if applied to a steelmaking electric furnace. Moreover, solid reduced iron typically contains gangue components, such as SiO₂, Al₂O₃, derived from iron ore being a raw material thereof. Therefore, a large amount of slag might be produced at the time of melting, causing operation trouble such as slag solidification in a furnace.

The present invention is made in view of such a background and aims to provide an electric furnace that can obtain molten iron by melting a cold iron source using electric energy and a heat source with reduced CO₂ emissions. The invention also proposes a steelmaking method that uses the electric furnace and heat source with reduced CO₂ emissions to melt a cold iron source. The present invention further proposes a steelmaking method that can stably melt solid reduced iron as the cold iron source.

### Solution to Problem

An electric furnace of the present invention can advantageously solve the abovementioned problems and obtain molten iron by melting a cold iron source using electric power. The electric furnace is characterized in that: the electric furnace is provided with a burner directed toward furnace contents; the burner comprises a powder-feeding pipe, a jet hole for jetting a fuel, and a jet hole for jetting combustion-supporting gas; a burner flame is formed by jetting hydrogen gas or a hydrogen-enriched gaseous fuel as the fuel; and an auxiliary material that is in a powder form or is processed into a powder form is jetted through the powder-feeding pipe, so that the auxiliary material passes through an inside of the burner flame.

Further, the electric furnace of the present invention is preferably a DC arc furnace, an AC arc furnace, or an induction melting furnace to solve the above problems.

A steelmaking method of the present invention can advantageously solve the abovementioned problems and obtain molten iron by melting a cold iron source using electric power in an electric furnace. The steelmaking method is characterized in that: the electric furnace is provided with a burner that comprises a jet hole for jetting a fuel and a jet hole for jetting combustion-supporting gas and that jets a flame through the jet holes toward an inside of the electric furnace; and for at least a part of duration of one-heat operation of the electric furnace, hydrogen gas or a hydrogen-enriched gaseous fuel is used as the fuel of the burner, and an auxiliary material that is in a powder form or is processed into a powder form is blown in to pass through an inside of the flame formed by the burner.

The steelmaking method of the present invention may provide more preferable solutions to the problems as follows:
(1) The cold iron source comprises solid reduced iron;
(2) The raw material that is in the powder form or is processed into the powder form is powdery lime; and
(3) The electric furnace is a DC arc furnace, an AC arc furnace, or an induction melting furnace.

### Advantageous Effects of Invention

According to the present invention, the powdery material is heated in the burner flame because it is fed through the burner flame, and serves as a heat transfer medium. Therefore, the combustion heat of the burner can be used for heating the cold iron source in the electric furnace with high efficiency, decreasing the amounts of the electric power used. Moreover, using hydrogen gas as the fuel can reduce the CO₂ emissions. Further, the flame temperature is lowered because the sensible heat of the combustion gas of the burner is consumed to heat the powdery material in the burner flame, ensuring the durability of a burner nozzle and preventing furnace-body refractories of the electric furnace from being worn out.

In the present invention, the powdery lime heated by the burner flame is blown onto the slag resulting from the melting of solid reduced iron to heat the slag and lower the melting point of the slag. This can enhance the slag formation and prevent poor operation caused by slag solidification. In particular, when using an induction melting furnace as the electric furnace, the slag is not directly heated because an induction current is not generated thereon, and thus slag solidification is easily caused. The present invention significantly improves this problem.

### Brief Description of Drawings

FIG. 1 is a schematic vertical cross-section view showing a schematic configuration of an AC arc furnace, as an electric furnace according to an embodiment of the present invention.
FIG. 2 is a schematic vertical cross-section view showing a schematic configuration of an induction melting furnace, as an electric furnace according to another embodiment of the present invention.
FIG. 3 is a schematic vertical cross-section view of a tip end part of a burner lance used in the above embodiments.

### Description of Embodiments

Embodiments of the present invention will be described in details below. The drawings are schematic and may be different from reality. Moreover, the following embodiments illustrate examples of devices and methods for embodying technical concepts of the present invention and are not meant to specify configurations to those described below. In other words, the technical concepts of the present invention may be modified in various manners within the technical scope set forth in the claims.

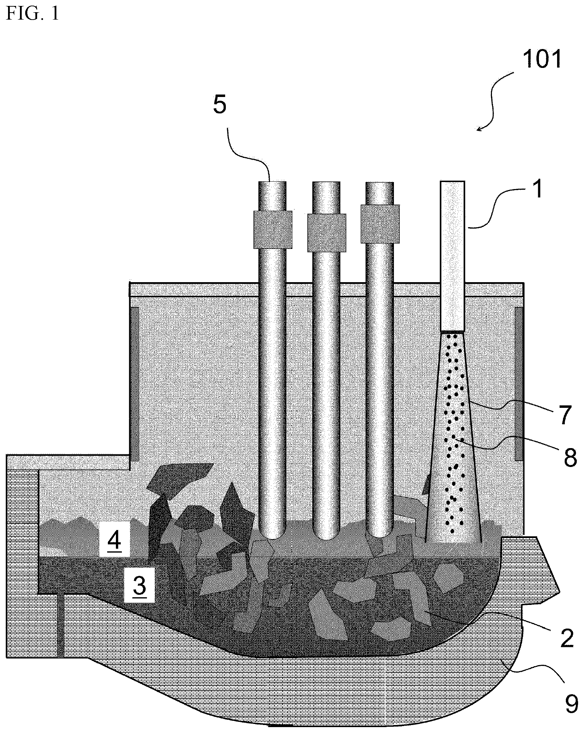

FIG. 1 is a schematic vertical cross-section view showing a configuration of an AC arc furnace 101, as an electric furnace according to an embodiment of the present invention and indicates a mode of operation using the AC arc electric furnace. In the present embodiment, a burner lance 1 is inserted through a burner lance insertion hole provided in a furnace lid so as to move up and down. Although FIG. 1 shows an example in which the burner lance 1 is inserted through the furnace lid so as to move up and down perpendicularly, possible embodiments are not limited to this example. The burner lance 1 may diagonally be inserted from above a furnace wall toward the inside of the furnace. Further, the burner is not limited to a lance type that can move up and down and may have such a configuration that the nozzle part is fixed to the furnace lid or a furnace wall. Furthermore, in addition to the burner, an oxygen-blowing lance inserted from a slag removal port may be provided, for example. The burner may have an oxygen blowing function so that oxygen is blown from the burner. The burner lance 1 jets a burner flame 7 toward the surface of contents of the furnace such as a cold iron source 2 or molten iron 3 housed in a furnace body 9. The AC arc furnace 101 shown in the drawing has three graphite electrodes 5. Agitation may be carried out by blowing gas from the bottom of the furnace. Further, the furnace body 9 has a tapping hole. The furnace lid has an exhaust gas duct (not shown) installed thereon. FIG. 1 shows a state in which the solid reduced iron, which was charged as the cold iron source 2, is being melted by applying an electric current. At this time, a powdery auxiliary material 8 is blown from the burner lance 1 through the burner flame 7 so as to promote the melting of the cold iron source 2. This operation is preferably use a fuel composed mainly of hydrogen gas that is produced with renewable energy such as solar power, wind power, or water power. The fuel that has hydrogen gas composed mainly of hydrogen gas denotes hydrogen gas or a hydrogen-enriched gaseous fuel. The hydrogen-enriched gaseous fuel can use a gas mixture in which hydrogen gas is mixed with methane gas, natural gas, or oil gas. From the viewpoint of decreasing CO₂, it is desirable that the gas mixture contains hydrogen gas by 50 vol% or more.

The above embodiment uses AC arc furnace 101 having three electrodes as the electric furnace and also can use a DC arc furnace having an upper electrode and a lower electrode. When using the AC arc furnace 101, which has electrodes 5 and an arc in a central part of the furnace body 9, as the electric furnace, possible installation positions of the burner lance 1 are limited. As described later, the burner of the present embodiment can lower the temperature of the burner flame 7 by appropriately blowing the powdery auxiliary material 8, even when using the fuel of which the main component is hydrogen gas, achieving an operation without wearing out a water cooling panel on a furnace wall, refractories on the furnace floor, etc.

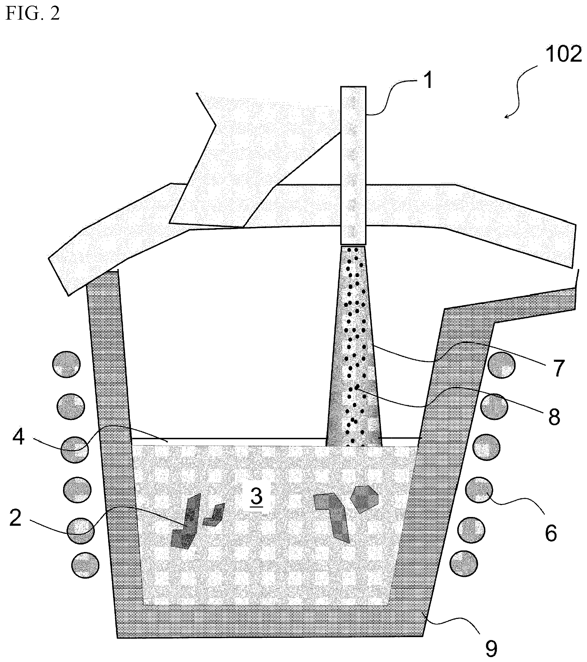

FIG. 2 is a schematic vertical cross-section view showing a configuration of an induction melting furnace 102 as an electric furnace according to another embodiment of the present invention and indicates a mode of operation using the induction melting furnace. The burner lance 1 of the present embodiment is inserted through a burner lance insertion hole provided in a furnace lid so as to move up and down. The burner is not limited to a lance type that can move up and down and may have such a configuration that the nozzle part is fixed to the furnace lid or a furnace wall. The burner lance 1 jets the burner flame 7 toward the surface of the cold iron source 2 or the molten iron 3 housed in the furnace body 9. The induction melting furnace 102 shown in the drawing has a coil 6 for induction heating, for example. Agitation may be carried out by blowing gas from the bottom of the furnace. The furnace body 9 has a tapping port. FIG. 2 shows a state in which the solid reduced iron, which was charged as the cold iron source 2, is being melted by induction heating by applying an electric current. At this time, a powdery auxiliary material is blown from the burner lance 1 through the burner flame to thus promote the melting of the cold iron source 2 and improve the slag composition. Specifically, powdery lime is blown onto the slag as the powdery auxiliary material 8 from the burner to dilute SiO₂ and Al₂O₃ contained in the solid reduced iron, lowering the melting point of the slag. It is also desirable to use a fuel mainly composed of hydrogen gas that is produced with renewable energy in this operation as in the above.

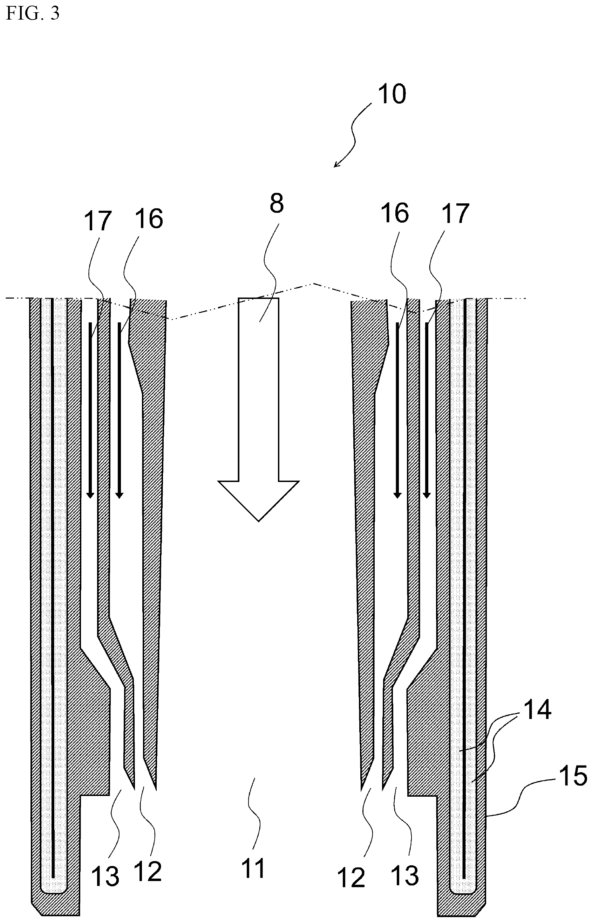

FIG. 3 is a schematic view of a tip end part 10 as an embodiment example of the burner lance 1 used in the abovementioned embodiment. A powder-feeding pipe 11 having a jetting hole is arranged at the center, and a fuel-feeding pipe 12 and a combustion-supporting gas feeding pipe 13, each having a jetting hole, are sequentially arranged around the powder-feeding pipe 11. An outer shell 15 comprising a cooling water passage 14 is provided on the outside thereof. The burner flame 7 is formed by feeding hydrogen gas or a hydrogen-enriched gaseous fuel as fuel gas 16 and by feeding combustion-supporting gas 17, through the jetting holes provided in an outer circumferential part of the powder-feeding pipe 11. The powdery auxiliary material 8 jetted through the powder-feeding pipe 11 is heated in the burner flame 7. The burner flame 7 is formed by feeding hydrogen gas or a hydrogen-enriched gaseous fuel serving as fuel gas 16 and combustion-supporting gas 17 through the jetting holes provided in an outer circumferential part of the powder-feeding pipe 11. Further, the powdery auxiliary material 8 jetted through the powder-feeding pipe 11 is heated in the burner flame 7. This makes the powdery auxiliary material 8 act as a heat transfer medium, increasing heat transfer efficiency of the flame to the furnace contents such as the cold iron source 2 and the molten iron 3. This can reduce the amount of electric power needed. The combustion-supporting gas 17 can use, other than pure oxygen, a gas mixture of oxygen with CO₂ or inert gas, air, or oxygen-enriched air. Further, the gas conveying the powdery material 8 may be inert gas or combustion-supporting gas.

The above embodiment example is an integrally-formed burner lance configured with the powder-feeding pipe at the center and arranging the jet hole for jetting a fuel and the jet hole for jetting a combustion-supporting gas around the powder-feeding pipe; however, possible forms of the burner lance are not limited to this example. In other words, the burner according to the present invention may be provided with a powder-feeding pipe, a jet hole for jetting a fuel, and a jet hole for jetting a combustion-supporting gas, where hydrogen gas or a hydrogen-enriched gaseous fuel is jetted as the fuel to form a burner so that an auxiliary material jetted through the powder-feeding pipe passes through the inside of the burner flame. For example, it is acceptable to provide an integrally-formed lance with a jet hole for jetting a fuel and a jet hole for jetting a combustion-supporting gas and to separately arrange a powder-feeding pipe to be positioned adjacent to the lance, so that the auxiliary material jetted through the powder-feeding pipe passes through the inside of the burner flame.

In a steelmaking method according to another embodiment of the present invention, for example, the cold iron source 2 such as iron scrap or solid reduced iron is first charged from a bucket (not shown) into an electric furnace such as the AC arc furnace 101 shown in FIG. 1 or the induction melting furnace 102 shown in FIG. 2. After the cold iron source 2 is charged for the first time, the application of an electric current is started. The burner lance 1 installed at an upper part of the furnace is inserted into the electric furnace to heat the cold iron source 2 with both electric power and the burner flame 7. When the first-charged cold iron source 2 further melts and reaches a flat bath state, a state where an unmelted portion, even if it exists, of the cold iron source 2 is soaked in the molten iron 3, slag may be removed through the slag removal port as required. Then, the electric current and the burner may be turned off, and the furnace lid may be opened to charge the cold iron source 2 for the second time. After the second charge of the cold iron source 2, it is desirable to resume the application of the electric current and to perform the burner heating operation in the same manner after the first charge. The cold iron source 2 may be charged three or more times.

The present inventors examined the heat transfer efficiency to the furnace contents and durability of the burner lance nozzle by using the electric furnace shown in FIG. 1 or FIG. 2 and varying the fuel gas flow rate and the powdery material feeding rate. As a result, we discovered the heat transfer efficiency to the furnace contents can be increased and the combustion flame temperature can be decreased by feeding the powdery material 8 in a sufficient amount with respect to a heat generating amount of the fuel gas 16. When the powdery material to fuel gas ratio expressed as "feeding speed of powdery material" / "fuel gas heat generating amount" is 6.7 (kg/MJ) or more, the flame temperature is approximately 1500°C or lower, which can reduce the thermal loads on the water cooling panel on the furnace wall, the refractories on the furnace floor, and the burner lance nozzle.

The powdery material may use: a slag forming agent that is the powder or powdered auxiliary material 8; dust; or the like. Efficient heating of the powdery material in the burner flame involves increasing the specific surface area, and thus the particle size is preferably approximately 100 µm or less. The auxiliary material with a larger particle size is preferably processed to have a particle size of approximately 100 µm or less. In this case, the particle size is expressed by the 50% passing rate on volume.

The cold iron source 2 preferably uses iron scrap and/or solid reduced iron reduced by using a reducing agent with less CO₂ emissions. Some solid reduced iron contains SiO₂ and Al₂O₃ by approximately 10 to 20 mass% as gangue components derived from iron ore, depending on its brand. When the solid reduced iron is melted, these substances form slag 4, which appears on the bath surface of the molten iron 3. The slag has a composition with a high melting point as it is, and thus would easily be solidified and adhere to the furnace wall, which may interfere with the operation. Especially, when using the induction melting furnace 102, the slag is not heated by induction, which is like to cause slag solidification.

It is preferable to use lime as the powdery auxiliary material 8 to be heated by the burner and fed, because it can control the basicity (i.e., the CaO/SiO₂ ratio in mass) of the slag to be approximately 1.0. Thus, the melting point of the slag can be lowered to prevent the solidification of the slag. The slag is heated by the heated powdery material, which achieves the advantageous effect of promoting slag formation. After the slag formation, slag may be removed or poured out during the melting or before tapping by tilting the furnace body of the arc furnace or the induction melting furnace.

Further, any type of electric furnace is applicable as long as it can melt the cold iron source with electric energy to obtain molten iron. For example, the electric furnace includes, in addition to the AC or DC arc furnace, a submerged arc furnace which applies heat by submerging a Soederberg self-baking electrode or the like in the slag can be applicable; an indirect-type resistance furnace which heats an object to be heated with radiation from a heat-generating body provided in the furnace, convection in the furnace, and/or a conductive heat transfer; and a plasma arc melting furnace.

The molten iron 3 melted in the present embodiment has a composition equivalent to the metal composition of the iron scrap or the solid reduced iron as a material and usually comprises molten steel with a relatively low C content. To adjust the composition, it is possible, in the same electric furnace where the melting was performed, to perform other treatments comprising adding alloy, conducting finishing decarburization treatment and dephosphorization treatment with oxygen-blowing refining. It is also possible to perform a secondary refining process comprising molten steel desulfurization and vacuum degassing after tapping. Subsequently, a semi-finished product such as a cast slab is obtained by casting step such as continuous casting and other processes.

### Examples

### Example 1

A cold iron source melting operation test was performed using the AC arc furnace 101 with the same configuration as that shown in FIG. 1. Solid reduced iron was used as the cold iron source 2 in a total charge amount of 100 t.

The burner lance 1, which was provided with a fuel-feeding line and an oxygen-feeding line, was installed in the furnace body. The tip end part 10 of the burner lance 1 had the same multiple-pipe structure as that shown in FIG. 3. As the burner fuel 16, methane gas, hydrogen gas, and a gas mixture of 50 vol% hydrogen and 50 vol% methane were used. A comparison was made on the following three cases: a case where no burner was used; a case where the furnace contents were heated by the burner flame alone with burner fuel fed but without powdery material fed; and a case where powdery lime was blown into the burner flame. The tapping temperature was 1650°C.

After the electric current started to be applied, when the melting of the first-charged cold iron source progressed to lower the height of the charged materials in the furnace such that there was space in the upper part of the furnace, the burner lance 1 was descended to apply heat from the burner flame 7 as well. Powdery lime was fed into the electric furnace using argon gas as conveyance gas at a feeding speed of 100 kg/min. The fuel gas 16 was jetted at different flow rates depending on its gas type used: 5 Nm³/min for methane gas, 16 Nm³/min for hydrogen gas, and 10.5 Nm³/min for hydrogen-methane gas mixture. Oxygen gas was fed as the combustion-supporting gas 17 for the combustion of the fuel gas 16 in each case.

When the first-charged cold iron source further melted and reached a flat bath state, a state where any unmelted portion of the cold iron source was soaked in the molten metal, slag was removed through the slag removal port. Then, the electric current and the burner were turned off to open the furnace lid and charge the cold iron source for the second time. After the second charge of the cold iron source, the electric current was resumed to perform the operation in the same manner as after the first charge. Thus, molten steel at 1650°C was eventually obtained and tapped into a ladle.

A comparison was made on the wear statuses of the burner lance nozzle, the electric power unit consumption, the presence/absence of slag solidification, and CO₂ emissions for each treatment condition. Table 1 shows the treatment conditions and results. The nozzle wear factor is an index indicating a relative wear amount when a wear amount in the case of using methane as the fuel gas was set to 1.0. The electric power unit consumption is an index calculated by dividing the electric power consumption under each treatment condition by the electric power consumption in treatment No. 1, which represents a conventional example. The slag solidification was visually observed and determined. The CO₂ emissions index is an index calculated by dividing the CO₂ emissions under each treatment condition by the CO₂ emissions in treatment No. 1, which represents a conventional example. In this comparison, the fossil fuels consumed to obtain the electric power were also taken into consideration to calculate the CO₂ emissions.

**[Table 1]**

| No. | BURNER | | | NOZZLE WEAR INDEX | ELECTRIC POWER UNIT CONSUMPTION | PRESENCE OF SLAG SOLIDIFICATION | CO₂ EMISSION INDEX | REMARKS |
|---|---|---|---|---|---|---|---|---|
| | USED OR NOT USED | TYPE OF FUEL | TYPE OF POWDER | | | | | |
| 1 | NOT USED | - | - | - | 1.0 | NONE | 1.0 | CONVENTIONAL EXAMPLE |
| 2 | USED | METHANE | NONE | 1.0 | 1.0 | NONE | 1.3 | COMPARISON EXAMPLE |
| 3 | USED | HYDROGEN | NONE | 1.5 | 1.0 | NONE | 1.0 | COMPARISON EXAMPLE |
| 4 | USED | 50% HYDROGEN - 50% METHANE | NONE | 1.4 | 1.0 | NONE | 1.2 | COMPARISON EXAMPLE |
| 5 | USED | METHANE | LIME | 1.0 | 0.7 | NONE | 0.9 | COMPARISON EXAMPLE |
| 6 | USED | HYDROGEN | LIME | 1.0 | 0.7 | NONE | 0.6 | INVENTION EXAMPLE |
| 7 | USED | 50% HYDROGEN - 50% METHANE | LIME | 1.0 | 0.7 | NONE | 0.7 | INVENTION EXAMPLE |

Under the conditions (Treatment Nos. 2 to 4) in which the furnace contents were heated by the burner flame alone, the burner combustion heat was not effectively transferred, resulting in the electric power unit consumption being substantially equal to the conventional example (Treatment 1) where no burner was used. Under the condition s (Treatment Nos. 3 and 4) in which the hydrogen-containing gas was used as the fuel without feeding the powder, the burner lance nozzle was substantially worn out. Under the conditions (Treatment Nos. 5 to 7) in which powdery lime was blown in through the burner flame, the combustion heat of the burner was transferred to the furnace contents with high efficiency, significantly reducing the electric power unit consumption. Under the conditions (Treatment Nos. 6 and 7) that used the hydrogen-containing gas, the CO₂ emissions was substantially reduced as compared with the conditions (Treatment No. 5) that used methane as the burner fuel, preventing the burner nozzle from being worn out.

In the present examples using the arc furnace, slag solidification was not observed in any condition.

### Example 2

A cold iron source melting operation test was performed by using the induction melting furnace 102 with the same configuration as that shown in FIG. 2. Reduced iron was used as the cold iron source in a total charge amount of 50 t.

The burner lance 1 provided with a fuel-feeding line and an oxygen-feeding line was installed in the furnace body. The tip end part 10 of the burner lance 1 had a similar structure to the multiple-pipe structure shown in FIG. 3. The burner fuel was either hydrogen gas, methane gas, or a gas mixture of 50 vol% hydrogen and 50 vol% methane. The following three cases were compared: one in which no burner was used; another in which the burner fuel was fed and the furnace contents were heated by the burner flame alone without feeding the powdery material; and the last one in which powdery lime was blown into the burner flame. The tapping temperature was 1650°C.

After the electric current started to be applied, when the melting of the first-charged cold iron source progressed to lower the height of the charged materials in the furnace such that there was space in the upper part of the furnace, the burner lance 1 was descended to apply heat from the burner flame 7 as well. Powdery lime was fed into the electric furnace using argon gas as conveyance gas at a feeding speed of 100 kg/min. The fuel gas 16 was jetted at different flow rates depending on its gas type used: 5 Nm³/min for methane gas, 16 Nm³/min for hydrogen gas, and 10.5 Nm³/min for hydrogen-methane gas mixture. Oxygen gas was fed as the combustion-supporting gas 17 for the combustion of the fuel gas 16 in each case.

When the first-charged cold iron source further melted and reached a flat bath state, where any unmelted portion of the cold iron source was soaked in the molten metal, the electric current and the burner were turned off to open the furnace lid and remove the slag by tilting the furnace body. After the completion of the slag removal, the furnace body was resumed to the original vertical posture to charge the cold iron source for the second time, and then the application of the electric current was resumed. After the second charge of the cold iron source, the same operation as after the first charge was performed. Thus, molten steel at 1650°C was eventually obtained and tapped into a ladle.

A comparison was made on the wear statuses of the burner lance nozzle, the electric power unit consumption, the presence/absence of slag solidification, and CO₂ emissions for each treatment condition. Table 2 shows the treatment conditions and results. The evaluation indexes are the same as those used in Example 1 were used. Treatment No. 8 served as a conventional example to be compared.

**[Table 2]**

| No. | BURNER | | | NOZZLE WEAR INDEX | ELECTRIC POWER UNIT CONSUMPTION | PRESENCE OF SLAG SOLIDIFICATION | CO₂ EMISSION INDEX | REMARKS |
|---|---|---|---|---|---|---|---|---|
| | USED OR NOT USED | TYPE OF FUEL | TYPE OF POWDER | | | | | |
| 8 | NOT USED | - | - | - | 1.0 | YES | 1.0 | CONVENTIONAL EXAMPLE |
| 9 | USED | METHANE | NONE | 1.0 | 1.0 | YES | 1.3 | COMPARISON EXAMPLE |
| 10 | USED | HYDROGEN | NONE | 1.5 | 1.0 | YES | 1.0 | COMPARISON EXAMPLE |
| 11 | USED | 50% HYDROGEN - 50% METHANE | NONE | 1.4 | 1.0 | YES | 1.2 | COMPARISON EXAMPLE |
| 12 | USED | METHANE | LIME | 1.0 | 0.7 | NONE | 0.9 | COMPARISON EXAMPLE |
| 13 | USED | HYDROGEN | LIME | 1.0 | 0.7 | NONE | 0.6 | INVENTION EXAMPLE |
| 14 | USED | 50% HYDROGEN - 50% METHANE | LIME | 1.0 | 0.7 | NONE | 0.7 | INVENTION EXAMPLE |

Under the conditions (Treatment Nos. 9 to 11) in which the furnace contents were heated by the burner flame alone, the burner combustion heat was not effectively transferred, resulting in the electric power unit consumption being substantially equal to the conventional example (Treatment 8) where no burner was used. Under the conditions (Treatment Nos. 10 and 11) in which the hydrogen-containing gas was used as the fuel without feeding the powder, the burner lance nozzle was substantially worn out. Further, the operation was hindered by slag solidification in the furnace.

Under the conditions (Treatment Nos. 12 to 14) where the powdery lime was added via the burner flame, because the combustion heat of the burner was transferred to the furnace contents with high efficiency, it was possible to significantly decrease the electric power consumption rates. Further, as compared with the level (Treatment No. 12) using methane as the burner fuel, the situations under the conditions (Treatment Nos. 13 and 14) using the hydrogen-containing gas were able to significantly reduce the CO₂ emissions and were also able to prevent the burner nozzle from being worn out. In addition, it was also possible to prevent solidification of the slag.

### Industrial Applicability

The electric furnace and the steelmaking method of the present invention can increase the heat transfer efficiency, and melt the cold iron source by using the heat source with reduced CO₂ emissions. This can reduce electric power unit consumption and decrease the environmental impact, which are industrially useful. Further, the present invention is applicable to other processes in a refining furnace that requires both heat source with reduced CO₂ emissions and the addition of a powdery auxiliary material.

### Reference Signs List

1 burner lance
2 cold iron source
3 molten iron
4 slag
5 electrode
6 coil
7 burner flame
8 powdery auxiliary material (powdery material)
9 furnace body
10 burner lance tip end part (nozzle)
11 powder-feeding pipe
12 fuel-feeding pipe
13 combustion-supporting gas feeding pipe
14 cooling water passage
15 outer shell
16 fuel gas
17 combustion-supporting gas
101 AC arc furnace
102 induction melting furnace

## Claims

1. An electric furnace that can obtain molten iron by melting a cold iron source using electric energy,
**characterized in that**:
the electric furnace is provided with a burner directed toward furnace contents;
the burner comprises a powder-feeding pipe, a jet hole for jetting a fuel, and a jet hole for jetting combustion-supporting gas;
a burner flame is formed by jetting hydrogen gas or a hydrogen-enriched gaseous fuel as the fuel; and
an auxiliary material that is in a powder form or processed into a powder form is jetted through the powder-feeding pipe, so that the auxiliary material passes through an inside of the burner flame.

2. The electric furnace according to claim 1, wherein
the electric furnace is a DC arc furnace, an AC arc furnace, or an induction melting furnace.

3. A steelmaking method that can obtain molten iron by melting a cold iron source using electric power in an electric furnace,
**characterized in that**
the electric furnace is provided with a burner that comprises a jet hole for jetting a fuel and a jet hole for jetting combustion-supporting gas and that jets a flame through the jet holes toward an inside of the electric furnace, and
for at least a part of duration of one-heat operation of the electric furnace, hydrogen gas or a hydrogen-enriched gaseous fuel is used as the fuel of the burner, and an auxiliary material that is in a powder form or is processed into a powder form is blown in to pass through an inside of the flame formed by the burner.

4. The steelmaking method according to claim 3, wherein
the cold iron source includes solid reduced iron.

5. The steelmaking method according to claim 3 or 4, wherein
the auxiliary material that is in the powder form or is processed into the powder form is powdery lime.

6. The steelmaking method according to any one of claims 3 to 5, wherein
the electric furnace is a DC arc furnace, an AC arc furnace, or an induction melting furnace.
